(19)

**Europäisches Patentamt**
**European Patent Office**
**Office européen des brevets**

(11) **EP 3 058 542 B1**

(12) **EUROPÄISCHE PATENTSCHRIFT**

(45) Veröffentlichungstag und Bekanntmachung des Hinweises auf die Patenterteilung:
**26.03.2025   Patentblatt 2025/13**

(21) Anmeldenummer: **14781064.2**

(22) Anmeldetag: **29.09.2014**

(51) Internationale Patentklassifikation (IPC):
***G06Q 10/08*** (2024.01)

(52) Gemeinsame Patentklassifikation (CPC):
**H04W 56/001; G06Q 10/08; G06Q 50/40;**
**H04J 3/0667; H04W 56/0015; H04W 56/0085**

(86) Internationale Anmeldenummer:
**PCT/EP2014/002636**

(87) Internationale Veröffentlichungsnummer:
**WO 2015/055279 (23.04.2015 Gazette 2015/16)**

(54) **VERFAHREN ZUM BETREIBEN EINES SYSTEMS FÜR INTRALOGISTISCHEN TRANSPORT UND SYSTEM**

SYSTEM AND METHOD FOR OPERATING A SYSTEM FOR INTRALOGISTICAL TRANSPORT

SYSTÈME ET PROCÉDÉ DE FONCTIONNEMENT D'UN SYSTÈME DE TRANSPORT INTRALOGISTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.10.2013   DE 102013017280**

(43) Veröffentlichungstag der Anmeldung:
**24.08.2016   Patentblatt 2016/34**

(73) Patentinhaber: **SEW-EURODRIVE GmbH & Co. KG**
**76646 Bruchsal (DE)**

(72) Erfinder: **BRECHT, Roland**
**76307 Karlsbad (DE)**

(56) Entgegenhaltungen:

EP-A1- 2 390 744          EP-A1- 2 390 858
WO-A1-2013/051445          WO-A1-2013/051447
CN-U- 202 677 192          JP-A- 2010 087 733
US-A1- 2010 020 909          US-A1- 2010 085 989
US-A1- 2010 085 990          US-A1- 2010 098 111
US-A1- 2011 261 917

- **JEREMY ELSON ET AL: "Fine-grained network time synchronization using reference broadcasts", OPERATING SYSTEMS REVIEW, ACM, NEW YORK, NY, US, vol. 36, no. SI, 31 December 2002 (2002-12-31), pages 147 - 163, XP058141972, ISSN: 0163-5980, DOI: 10.1145/ 844128.844143**
- **M. MOCK ET AL: "Continuous clock synchronization in wireless real-time applications", RELIABLE DISTRIBUTED SYSTEMS, 2000. SRDS-2000. PROCEEDINGS THE 19TH IE EE SYMPOSIUM ON  NURNBERG, GERMANY 16-18 OCT. 2000, 1 January 2000 (2000-01-01), US, pages 125 - 132, XP055562521, ISBN: 978-0-7695-0543-5, DOI: 10.1109/ RELDI.2000.885400**
- **C. LOZOYA ET AL: "Effective Real-Time Wireless Control of an Autonomous Guided Vehicle", INDUSTRIAL ELECTRONICS 2007, 1 June 2007 (2007-06-01), IEEE Xplore, pages 2876 - 2881, XP055562559, ISBN: 978-1-4244-0755-2, DOI: 10.1109/ISIE.2007.4375070**
- **"Dynamics in Logistics", 17 August 2013, SPRINGER BERLIN HEIDELBERG, Berlin, Heidelberg, ISBN: 978-3-642-35966-8, ISSN: 2194-8917, article ANDREAS KAMAGAEW ET AL: "Collaborative Detection of Autonomous Transport Vehicles", pages: 49 - 65, XP055562528, DOI: 10.1007/978-3-319-01378-7_4**

- D MILLS ET AL: "Network Time Protocol Version 4: Protocol and Algorithms Specification", 1 June 2010 (2010-06-01), XP055562531, Retrieved from the Internet <URL:https://tools.ietf.org/pdf/rfc5905.pdf> [retrieved on 20190227]
- KENDALL CORRELL ET AL: "Design Considerations for Software Only Implementations of the IEEE 1588 Precision Time Protocol", 1 October 2005 (2005-10-01), pages 1 - 6, XP055332409, Retrieved from the Internet <URL:https://repo.eecs.berkeley.edu/svn-anon/projects/eal/ptII/branches/initialization-rework/ptolemy/apps/ptidesBareIron/PtidesOS/third_party/ptpd-1rc1/doc/ptpd_2005_1588_conference_paper.pdf> [retrieved on 20170105]
- FENGYUAN REN ET AL: "Self-correcting time synchronization using reference broadcast in wireless sensor network", IEEE WIRELESS COMMUNICATIONS, COORDINATED SCIENCE LABORATORY; DEPT. ELECTRICAL AND COMPUTER ENGINEERING; UNIVERSITY OF ILLINOIS AT URBANA-CHAMPAIGN, US, vol. 15, no. 4, 1 August 2008 (2008-08-01), pages 79 - 85, XP011233037, ISSN: 1536-1284, DOI: 10.1109/MWC.2008.4599225
- LU XIE ET AL: "Efficient time synchronization of 1588v2 technology in packet network", COMMUNICATION SOFTWARE AND NETWORKS (ICCSN), 2011 IEEE 3RD INTERNATIONAL CONFERENCE ON, IEEE, 27 May 2011 (2011-05-27), pages 181 - 185, XP032050098, ISBN: 978-1-61284-485-5, DOI: 10.1109/ICCSN.2011.6014030
- SCHEITERER R L ET AL: "Synchronization Performance of the Precision Time Protocol in Industrial Automation Networks", IEEE TRANSACTIONS ON INSTRUMENTATION AND MEASUREMENT, IEEE, USA, vol. 58, no. 6, 1 June 2009 (2009-06-01), pages 1849 - 1857, XP011255351, ISSN: 0018-9456
- GEORG GADERER ET AL: "Improving Fault Tolerance in High-Precision Clock Synchronization", IEEE TRANSACTIONS ON INDUSTRIAL INFORMATICS, IEEE SERVICE CENTER, NEW YORK, NY, US, vol. 6, no. 2, 1 May 2010 (2010-05-01), pages 206 - 215, XP011334313, ISSN: 1551-3203, DOI: 10.1109/TII.2010.2044580
- "IEEE Standard for a Precision Clock Synchronization Protocol for Networked Measurement and Control Systems;IEEE Std 1588-2008 (Revision of IEEE Std 1588-2002) ED - Anonymous", IEEE STANDARD; [IEEE STANDARD], IEEE, PISCATAWAY, NJ, USA, 24 July 2008 (2008-07-24), pages c1 - 269, XP017604130, ISBN: 978-0-7381-5400-8
- K BALAKRISHNAN ET AL: "Clock synchronization in industrial Internet of Things and potential works in precision time protocol: Review, challenges and future directions", INTERNATIONAL JOURNAL OF COGNITIVE COMPUTING IN ENGINEERING, vol. 4, 7 June 2023 (2023-06-07), pages 205 - 219, XP093072595, ISSN: 2666-3074, DOI: 10.1016/j.ijcce.2023.06.001

**Beschreibung**

Die Erfindung betrifft ein Verfahren zum Betreiben eines Systems für intralogistischen Transport und ein System zur Durchführung des Verfahrens.

Es ist allgemein bekannt, dass fahrerlose Transportsysteme, also FTS, oder automatisch geführte Fahrzeuge, AGV, zum intralogistischen Transport geeignet sind.

Aus der CN 202 677 192 U ist ein solches FTS bekannt.

Aus der Veröffentlichung JEREMY ELSON ET AL: "Fine-grained network time synchronization using reference broadcasts", OPERATING SYSTEMS REVIEW, ACM, NEW YORK, NY, US, Bd. 36, Nr. SI, 31 December 2002, Seiten 147 - 163, XP058141972 ist ein zeitliches Synchronisierverfahren und eine statistische Auswertung hierzu bekannt.

Aus der XP055562521 ist eine kontinuierliche Uhrensynchronisation in kabellosen Echtzeitsystemen bekannt.

Aus der XP055562559 ist eine kabellose effektive Echtzeit-Steuerung einen autonomgelenkten Fahrzeugs bekannt.

Aus der XP055562528 sind autonome Fahrzeuge bekannt, welche bezüglich einer Detektion zusammenarbeiten.

Aus der XP 055562531 ist ein Netzwerkzeitprotokoll bekannt, wobei nicht nur das Protokoll, sondern auch ein Algorithmus beschrieben wird.

Aus der XP055332409 sind Designüberlegungen für Software-Implementierungen des IEEE1588 Präzisionszeitprotokolls bekannt.

Aus der XP 011233037 ist ein selbstkorrigierendes Zeitsynchronisationssystem bekannt, welches eine Broadcast-Referenz nutzt in einem kabellosen Sensornetzwerk.

Aus der XP032050098 ist eine effiziente Zeitsynchronisation in einem Paketvermittlungsnetz bekannt.

Aus der XP011255351 ist eine Synchronisations-Leistung von einem Präzisionszeitprotokoll in einem industriellen Automatisierungsnetzwerk bekannt.

Aus der XP011334313 eine verbesserte Fehlertoleranz bei Hochpräzisionszeit-Synchronisationen bekannt.

Aus der XP 017604130 ist ein Standard für ein Präzisionszeitsynchronisationprotokoll für Netz-basierte Regelsysteme bekannt.

Aus der US 2010/085990 A1 ist ein Verfahren für ein Netzwerkgerät bekannt, um Updates einzuspielen und Verzögerungen von zeitbezogenen Datenpaketen anzuzeigen.

Aus der US 2010 /085989 A1 ist ein Verfahren für die Paket-basierte Bestimung von Zeitoffsets bekannt.

Aus der US 2010 /020909 A1 ist eine Synchronisationsvorrichtung bekannt und ein Verfahren für ein Paketvermittlungsnetz bekannt.

Aus der WO 2013/051445 A1 ist ein Gerät zum Erkennen von Frequenzdifferenzen bekannt.

Aus der WO 2013/051447 A1 ist ein Zeitsteuergerät bekannt.

Aus der US 2011/261917 A1 ist eine Zeitsynchronisation bekannt, die Paket-Schichten-Protokolle ausnutzt.

Aus der US 2010/098111 A1 ist ein Verfahren mit einer präzisen Synchronisation bekannt.

Aus der EP 2 390 858 A1 ist ein Steuerungsverfahren für eine Fahrzeuggruppe bekannt.

Aus der JP 2010 087733 A ist ein Funk-Kommunikationsgerät für eine Fahrzeug-zu-Fahrzeug- Kommunikation bekannt.

Aus der EP 2 390 744 A1 ist ein Steuerungssystem für Kolonnenfahrzeuge bekannt.

Aus der XP 093072595 ist eine Uhrensynchronisierung in einem industriellen Internet der Dinge bekannt und mögliche Arbeiten in Echtzeitprotokollen.

Der Erfindung liegt daher die Aufgabe zugrunde, bei einer logistischen Transportaufgabe mit mehreren über eine Datenübertragungsleitung zur Kommunikation verbundenen Fahrzeugen auszuführen, wobei die Datenübertragung nicht echtzeitfähig ist.

Erfindungsgemäß wird die Aufgabe bei dem Verfahren zum Betreiben eines Systems für intralogistischen Transport nach den in Anspruch 1 und bei dem System nach den in Anspruch 5 angegebenen Merkmalen gelöst.

Wichtige Merkmale der Erfindung bei dem Verfahren zum Betreiben eines Systems für intralogistischen Transport sind, dass

wobei das System Teilnehmer, insbesondere Fahrzeuge, aufweist, welche mittels eines Datenübertragungskanals verbunden sind, so dass jeder Teilnehmer ein Teilnehmer einer zur Datenübertragung mittels des Datenübertragungskanals verbundenen Gruppe von Teilnehmern ist, wobei die Datenübertragung nicht-echtzeitfähig ist, insbesondere wobei der Datenübertragungskanal eine WLAN-Verbindung ist,

wobei jeder Teilnehmer eine Zeitbasis, also Uhr, aufweist,

wobei

- eine Gruppe gebildet wird
- die Zeitbasis jedes Teilnehmers der Gruppe synchronisiert wird, insbesondere also als zum Betreiben verwendete Zeit die um einen mittels der Synchronisierung bestimmten Zeitversatz geänderte Zeit der Zeitbasis vom Teilnehmer verwendet wird,
- Teilnehmer in Abhängigkeit von einem jeweiligen als Master fungierenden Teilnehmer oder in gegenseitiger Abhängigkeit bewegt werden, wobei die vom jeweiligen Teilnehmer, zum jeweiligen Zeitpunkt, angesteuerte Position abhängt von der jeweiligen Position mindestens eines anderen Teilnehmers der Gruppe oder von der jeweiligen Position mehrerer oder aller anderen Teilnehmer der Gruppe.

Von Vorteil ist dabei, dass trotz einer nicht-echtzeitfähigen Datenübertragungsverbindung ein Ausführen einer Bewegung der Teilnehmer in gegenseitiger Abhängigkeit ausführbar ist. Denn die Leitwerte oder Feldbus-Steuerworte für die Bewegung sind vom Teilnehmer speicherbar in einem Pufferspeicher und dann ohne Unterbrechung ausführbar - auch wenn die Datenverbindung nicht echtzeitfähig ist, also nur zeitabschnittsweise Daten mit hoher Datenübertragungsrate übertragen werden. Denn mittels der Synchronisierung ist das Ausführen der gepufferten Befehle beziehungsweise das Ansteuern der gepufferten Leitwerte einfach und zeitsynchron unter den Teilnehmern der Gruppe ausführbar.

Bei einer vorteilhaften Ausgestaltung wird zur Bildung der Gruppe ein Kriterium angewendet,

insbesondere wobei das Kriterium

- die Erreichbarkeit mittels der Datenübertragung mittels des Datenübertragungskanals,
- den Abstand zu einem ersten Teilnehmer,
- den Abstand zu einer Position, insbesondere Raumposition,

betrifft. Von Vorteil ist dabei, dass die Gruppe in einfacher Weise bildbar ist. Insbesondere ist auch die logistische Aufgabe besonders schnell und einfach lösbar, da die Teilnehmer, insbesondere Fahrzeug sich schnell als Gruppe zusammenfinden.

Bei einer vorteilhaften Ausgestaltung wird das Bewegen der Teilnehmer in Abhängigkeit von einem jeweiligen als Master fungierenden Teilnehmer oder in gegenseitiger Abhängigkeit

- nach dem Prinzip der elektronischen Kurvenscheibe oder
- nach dem Prinzip des elektronischen Getriebes erfolgt oder
- als eine andere zusammengesetzte Kinematik-Bewegung mit virtuellem Leitwertbezug

ausgeführt. Von Vorteil ist dabei, dass trotz einer nicht echtzeitfähigen Verbindung zeitsynchrone Kinematik-Bewegungen ermöglicht sind.

Erfindungsgemäß sendet ein erster Teilnehmer der Gruppe ein Mastertelegramm, insbesondere als Broadcast-Telegramm, und jeder Teilnehmer der Gruppe sendet daraufhin ein Antworttelegramm,

wobei i die Teilnehmer der Gruppe durchnummeriert,

wobei beim Absenden des Mastertelegramms der zugehörige Zeitpunkt t1 als Zeitstempel dem Mastertelegramm vom ersten Teilnehmer hinzugefügt wird,

wobei der jeweils empfangende Teilnehmer, also der jeweils i-te Teilnehmer, bei Empfangen des Mastertelegramms den Zeitstempel $t2\_i$ hinzufügt,

wobei bei Absenden des Antworttelegramms der i-te Teilnehmer den Zeitstempel $t3\_i$ hinzufügt und bei Empfang des Antworttelegramms der Master den hierbei aktuellen Zeitstempel t4 hinzufügt,

wobei der erste Teilnehmer, welcher das Mastertelegramm abgesendet hat, einen Schätzwert $dt1\_i$ für Laufzeit bestimmt, insbesondere gemäß

$$dt1\_i = ((t4 - t1) - (t3\_i - t2\_i)) / 2$$

Von Vorteil ist dabei, dass aus den Zeitstempeln eine synchronisierte Zeit in einfacher Weise bestimmbar ist, insbesondere wenn mehrere Zeitstempel zeitlich wiederkehrend berücksichtigt werden. Dabei wird die Datenübertragungsleitung sozusagen ausgemessen wird. Zugrunde liegt dabei die Annahme, dass die Übertragungszeit vom ersten Teilnehmer zum jeweils empfangenden Teilnehmer der Übertragungszeit vom jeweils empfangenden Teilnehmer zum ersten Teilnehmer gleicht.

Erfindungsgemäß wird die Synchronisierung, insbesondere also der Zeitversatz, bestimmt, indem

zu jedem Antworttelegramm des i-ten Teilnehmers jeweils als Sollwert t_Soll_i der Wert t2_i verwendet und als Istwert t_ist_i, welcher als Summe (t1 + dt1_i) bestimmt wird, verwendet wird,

wobei der Sollwert und der Istwert einem Reglerglied zugeführt werden, wobei die Abweichung zwischen Sollwert und Istwert multipliziert wird mit einer jeweiligen Gütekennzahl GK_i und dann dem Reglerglied zugeführt wird,

insbesondere wobei das Reglerglied ein lineares Glied ist, insbesondere ein PI-Glied ist,

wobei die, insbesondere begrenzten, Ausgangssignale der jeweiligen Reglerglieder aufsummiert werden und daraus die synchronisierte Zeit bestimmt wird,

insbesondere indem das aufsummierte Signal durch die Anzahl der Teilnehmer der Gruppe dividiert wird und das Ergebnis mit einer Kennzahl multipliziert wird, welche die Synchronisationsbereitschaft darstellt, und das so entstandene Signal zur Nachführung der synchronisierten Zeit verwendet wird, insbesondere umfassend einer Begrenzung und Mittelwertfilterung,

insbesondere wobei die aktuelle synchronisierte Zeit aus der zuvor bestimmten synchronisierten Zeit bestimmt wird, indem das so entstandene Signal oder zumindest ein Anteil desselben zu der zuvor bestimmten synchronisierten Zeit aufsummiert wird. Von Vorteil ist dabei, dass die synchronisierte Zeit einfach nachführbar ist gemäß t_k = t_k-1 + Y_Result, wobei t_k die aktuelle synchronisierte Zeit zum Zeitschritt k, t_k-1 die zuvor bestimmte synchronisierte Zeit, also die synchronisierte Zeit zum Zeitschritt k-1 und Y_Result das zur Nachführung verwendete Signal ist.

Erfindungsgemäß wird die Kennzahl zur Darstellung der Synchronisationsbereitschaft gemäß SB_i = MAX (100% - GK_i +SB_BASIC, 100%) bestimmt, wobei GK_i hier die Gütekennzahl des den Regler aufweisenden Teilnehmers, insbesondere des i-ten Teilnehmers der Gruppe, insbesondere Fahrzeugs, ist und eine SB_BASIC ein vorgebbarer Parameter. Von Vorteil ist dabei, dass eine einfach bestimmbare Kennzahl verwendet wird.

Erfindungsgemäß wird zur Bestimmung der Gütekennzahl der Synchronisation der Gruppe für jeden Teilnehmer der Gruppe die jeweiligen Betragswert der jeweiligen Differenzen zwischen der synchronisierten Zeit und dem zu diesem Teilnehmer, insbesondere zum i-ten Teilnehmer der Gruppe, zugehörigen Sollwert auf das Unterschreiten eines kritischen Wertes, insbesondere Schwellwertes, EPSILON überwacht wird und bei Unterschreiten die Betragswert einer Gütekennzahlermittlungseinheit zugeführt werden, deren Ausgangssignal die Gütekennzahl darstellt. Von Vorteil ist dabei, dass der Gütekennzahlermittlungseinheit für jeden genügend gut aufsynchronisierten Teilnehmer ein binäres Signal mit dem Wert HIGH zugeführt wird und somit durch Aufaddieren der binären Signale die Gütekennzahl einfach bestimmbar ist.

Bei einer vorteilhaften Ausgestaltung wird eine jeweilige Gütekennzahl, insbesondere des i-ten Teilnehmers, bestimmt gemäß

$$GK\_i = k * 100\% / m,$$

wobei k = Anzahl der Zyklen aus den letzten m Zyklen, bei denen der Abstand eines Synchronisationssollwertes und eines Synchronisationsistwertes kleiner ist als ein Schwellwert oder ein kritischer Wert EPSILON. Von Vorteil ist dabei, dass die Bestimmung der Gütekennzahl des i-ten Teilnehmers der Gruppe schnell und einfach ausführbar ist.

Wichtige Merkmale bei dem System zur Durchführung eines vorgenannten Verfahrens sind, dass die Teilnehmer als Fahrzeuge, wie FTS oder AGV, ausgeführt sind und jeweils eine Einrichtung zum Senden und/oder Empfangen von Daten, insbesondere Telegrammen, mittels des Datenübertragungskanals aufweisen.

Von Vorteil ist dabei, dass zur Lösung einer logistischen Aufgabe Fahrzeuge in gegenseitiger Abhängigkeit verfahrbar sind, wobei die Datenübertragungsleitung nicht echtzeitfähig ist und trotzdem ein synchronisiertes Verfahren der Fahrzeuge ermöglicht ist. Um dabei eine einfache Ausführung zu ermöglichen, werden die anzufahrenden Leitwerte, also zeitabhängigen Positionssollwerte in einem Pufferspeicher gespeichert, der dem jeweiligen Zeitschritt den jeweiligen Leitwert zuordnet, und dann die Ausführung der Bewegung verzögert um einen Offsetwert ausgeführt, wobei aber die Zeitschritte in der synchronisierten Zeit abgearbeitet werden.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

In der Figur 1 ist ein beispielhaftes Logistik-System gezeigt.

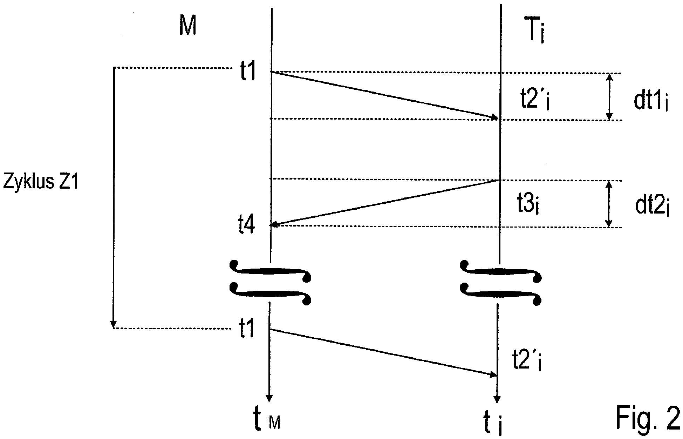

In der Figur 2 ist die Synchronisationstiming dargestellt.

In der Figur 3 ist die Gruppenmitgliedstabelle dargestellt.

IN der Figur 4 ist der Multimaster-Uhren-Synchronisationsregler dargestellt.

In der Figur 5 ist das Nachrichtenprinzip dargestellt.

Erfindungsgemäß ist ein System von Fahrzeugen, beispielsweise automatisch geführte Fahrzeuge (AGV) und/oder fahrerlose Transportsysteme (FTS) vorgesehen, die jeweils als Busteilnehmer ausgeführt sind. Hierzu weisen die Fahrzeuge eine elektronische Schaltung auf, die als Sender und/oder Empfänger für eine Datenübertragung, insbesondere berührungslose Datenübertragung, ausgeführt sind. Vorzugsweise ist hierbei eine nicht streng taktsynchrone und/oder nicht echtzeitfähige Datenübertragung, wie WLAN-Verbindung oder dergleichen, zwischen den Fahrzeugen aufbaubar.

Die Fahrzeuge, also mobile Einheiten, weisen auch ein Positionsbestimmungsmittel auf, so dass sie zumindest ihre ungefähre Position bestimmen können.

Zur Ausführung einer - beispielsweise von einer zentralen Steuerung vorgegebenen - logistischen Aufgabe wird eine Gruppe von Fahrzeugen gebildet.

Hierbei erfordert die Aufgabe eine synchronisierte Bewegung der Fahrzeuge. Beispielsweise kann dies nach dem Prinzip der elektronischen Kurvenscheibe, des elektronischen Getriebes erfolgen oder andere zusammengesetzt Kinematik-Bewegungen mit virtuellem Leitwertbezug erfordern. Dabei wird ein Fahrzeug als Leitwertgeber verwendet und seine zeitabhängige Position, insbesondere Sollposition, den anderen Fahrzeugen der Gruppe mitgeteilt, die dann eine jeweilige Position ansteuern, welche abhängig ist von der Position des Leitwertgebers.

Im einfachsten Fall ist die Aufgabe, eine fahrende Kolonne zu bilden, also dem jeweiligen Leitwertgeber in konstantem Abstand zu folgen und/oder einen konstanten Abstand zum nächstbenachbarten Fahrzeug einzuhalten. Auch kann ein Transportbetrieb mit Verbundbeteiligung, also ein Mehrfahrzeug-Betrieb, gefordert sein, wobei ein Objekt von mehreren Fahrzeugen aufgenommen wird und gemeinsam transportiert wird, wozu die Fahrzeuge zum Leitwertgeber-Fahrzeug einen konstanten Abstand einhalten müssen.

Die jeweils ad hoc gebildete Gruppe ist nicht vorhersehbar, so dass für die Synchronisation kein Synchmaster nach IEC 1588 gebildet werden kann. Denn es ist nicht vorhersehbar, welches Fahrzeug als Synchmaster bestimmbar, aushandelbar oder verwendbar wäre.

Jedes Fahrzeug hat zwar eine Zeitbasis, also Uhr, jedoch müssen die Uhren der Fahrzeuge synchronisiert werden, da die Datenübertragung nicht streng zyklisch und taktsynchron erfolgt, sondern in Datenpaketen, die verschiedene Zeiten von Sender zum Empfänger benötigen, wie aus dem Ethernet oder Internet bekannt.

Die Fahrzeuge sind beispielsweise auch als Roboter ausführbar.

Zu Bildung der Gruppe finden sich die Fahrzeuge dynamisch zusammen und trennen sich auch wieder ebenso. Somit wäre ein Synchmaster nicht sinnvoll bestimmbar oder würde zumindest zu mangelnder Zuverlässigkeit oder zu einem Deadloock-Risiko führen.

Die Gruppe wird nach einem Kriterium gebildet. Beispielsweise ist eine Transportaufgabe von einer bestimmten Startposition aus zu erledigen, wobei mehrere Fahrzeuge notwendig sind. Ein erstes Fahrzeug bekommt den Auftrag, weil es entweder von der zentralen Steuerung bestimmt wird oder, weil es zufällig an der Startposition vorbeifährt. Nach dem Kriterium wird dann die Gruppe gebildet. Das Kriterium ist beispielsweise, dass ein Abstandswert unterschritten wird zwischen dem ersten Fahrzeug und einem jeweiligen weiteren Fahrzeug. Somit ist die Gruppe aus Fahrzeugen bildbar, die verfügbar sind, sich als verfügbar erklären und/oder möglichst nahe beim ersten Fahrzeug oder der Startposition sich befinden.

Wenn die Fahrzeuge als Schienenfahrzeug ausgeführt sind, ist das Kriterium auch als Strecke vorgebbar, auf welcher sich die Fahrzeuge befinden müssen. Bei auf einem Boden verfahrbaren Fahrzeugen ist eine Fläche vorgebbar, wobei diejenigen Fahrzeuge, welche sich auf der Fläche befinden, zur Gruppe hinzugefügt werden. Bei räumlich positionierbaren Fahrzeugen ist das Kriterium nicht erfindungsgemäß durch Vorgabe eines Raumbereichs realisierbar, wobei diejenigen Fahrzeuge, welche sich im Raumbereich befinden, zur Gruppe hinzugefügt werden. Als Kriterium ist erfindungsgemäß auch die Vorgabe realisierbar, dass alle über die Datenübertragungsverbindung erreichbaren, insbesondere vom ersten Fahrzeug aus erreichbaren, Fahrzeuge als Teilnehmer zur Gruppe hinzugefügt werden. Somit ist also kein geometrisches, sondern ein kommunikationsbezogenes Kriterium verwendbar.

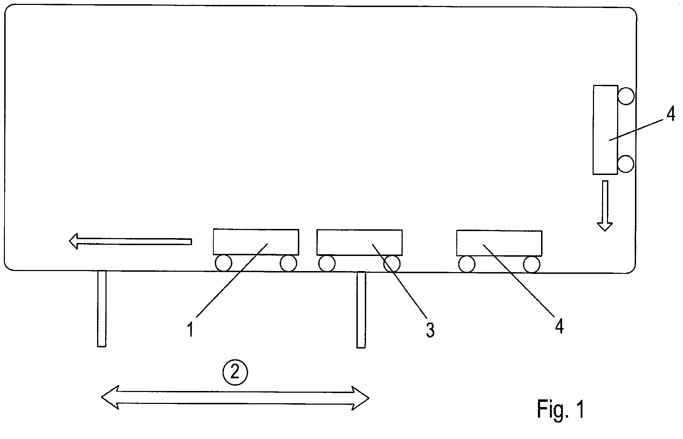

In Figur 1 ist beispielhaft eine Strecke 2 gezeigt, in welcher die Schienengeführten Fahrzeuge 1 und 3 sich befinden. Die weiteren Fahrzeuge 4 sind außerhalb, insbesondere da beabstandet von der Strecke 2, angeordnet und können somit nicht in die Gruppe mitaufgenommen werden.

Ein beispielhafter Auftrag könnte heißen, dass eine Palette von der Position 1 aufzunehmen ist und von zwei Fahrzeugen (1, 3) zu transportieren ist zu einer Zielposition, wobei nur geeignete Fahrzeuge eingesetzt werden dürfen, deren Merkmale zur Lösung der Logistikaufgabe geeignet sind und wobei die Merkmale der Fahrzeuge in einer Attributtabelle hinterlegt sind.

Eine andere Logistikaufgabe wäre, dass Fahrzeuge innerhalb eines Positionsbereichs, also innerhalb einer vorgegebenen Strecke, Fläche oder Raumbereichs, einen Kolonnenbetrieb durchführen sollen, also synchronisiert aufschließen sollen. Dabei muss während des Kolonnenbetriebs, also innerhalb des Positionsbereichs ein konstanter Abstand eingehalten werden, so dass der Abstand zum nächstbenachbarten Fahrzeug der Gruppe möglichst konstant haltbar ist.

Die Fahrzeuge der Gruppe weisen eine jeweils eineindeutig zum Fahrzeug zugeordnete Adresse für die Datenübertragung auf, also eine eindeutige Identifikationsinformation auf.

Nach gebildeter Gruppe legt jedes Fahrzeug eine Zykluszeit Z1 fest und versendet dann zeitlich wiederkehrend mit jeweiligem Zeitabstand Z1 ein Mastertelegramm ab als Broadcast-Telegramm, also als zumindest an alle Fahrzeuge der Gruppe gerichtetes Telegramm.

Jedes Fahrzeug der Gruppe sendet nach Empfang dieses Mastertelegramms ein Antworttelegramm zurück.

Beim Absenden des Mastertelegramms wird der zugehörige Zeitpunkt t1 als Zeitstempel dem Mastertelegramm hinzugefügt. Das jeweils empfangende Fahrzeug, also der i-te Teilnehmer, wobei i die Fahrzeuge der Gruppe durchnummeriert, fügt bei Empfangen des Mastertelegramms den Zeitstempel t2_i zu. Bei Absenden des Antworttelegramms fügt der i-te Teilnehmer den Zeitstempel t3_i hinzu und bei Empfang des Antworttelegramms fügt der Master den hierbei aktuellen Zeitstempel t4 hinzu.

Somit ist dasjenige Fahrzeug, welches das Mastertelegramm abgesendet hat, in der Lage, die eine zum Zeitpunkt t erfasste gemittelte Telegrammlaufzeitschätzung gemäß

$$dt1\_i = ((t4 - t1) - (t3\_i - t2\_i)) / 2$$

zu bestimmen, wobei diese Telegrammlaufzeit bezogen ist auf den i-ten Teilnehmer, also das i-te Fahrzeug der Gruppe. Somit ist ein Schätzwert für die Laufzeit der Telegrammübermittelung zwischen dem das Mastertelegramm gesendete habenden Fahrzeug und jedem der anderen Fahrzeuge der Gruppe bestimmbar. Dabei ist die Annahme berücksichtigt, dass die Laufzeit in beiden Richtungen gleich ist.

Außerdem ist eine Gütekennzahl für den Synchronisationszustand des i-ten Teilnehmers bestimmbar gemäß

$$GK\_i = 100\% * k / m,$$

wobei k die Anzahl derjenigen Zyklen der letzten m Zyklen ist, bei denen die Differenz zwischen Synchronisationssollwert und Synchronisationsistwert kleiner ist als ein kritischer Wert EPSILON. Die Zyklusfrequenz wird vorzugsweise festgelegt als S_MAX / (n * n), wobei S_MAX einen vorgebbaren Wert darstellt, der die maximale Telegrammbelastung der Datenübertragung pro Zeiteinheit darstellt, und n die Anzahl der Teilnehmer in der Gruppe ist.

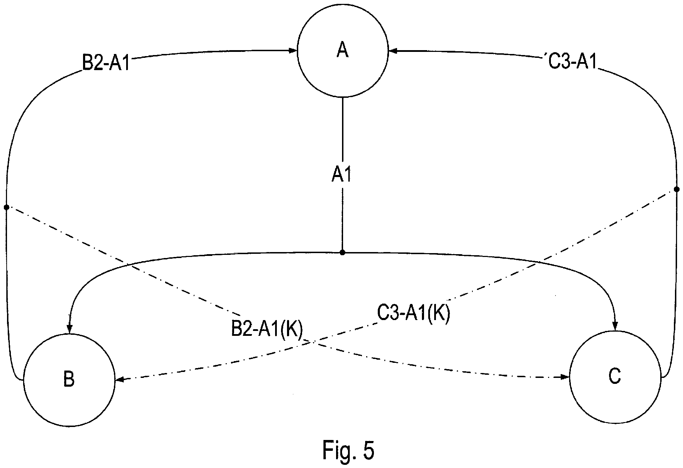

In Figur 5 ist dargestellt, dass der Teilnehmer A das Mastertelegramm A1 sendet und die Antworttelegramme B2-A1, C3-A1 versendet werden. Die Antworttelegramme B2-A1 und C3 - A1 sind die von Teilnehmer C beziehungsweise B mitgehörten Antworttelegramme.

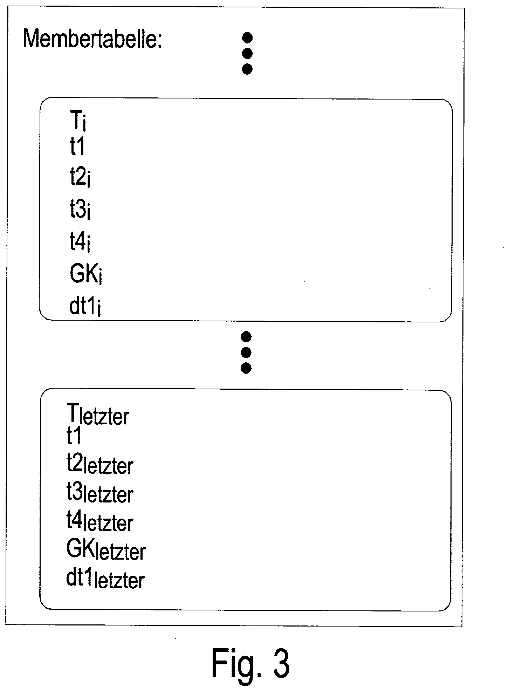

Jeder Teilnehmer erfasst in einer jeweiligen Tabelle die dem jeweiligen anderen Teilnehmer der Gruppe zugeordneten Daten, wie in Figur 3 dargestellt. Für die Synchronisierung der Zeitbasen der Teilnehmer ist es notwendig, den Zeitversatz zwischen den Zeitbasen der Teilnehmer zu bestimmen. Hierzu werden die oben beschriebenen Zeitstempel-Daten ausgewertet. Dabei wird der Zeitversatz zwischen den Zeitbasen unter Verwendung eines Reglers bestimmt. Zur Bestimmung der Eingangsgrößen werden zu jedem Teilnehmer der Gruppe jeweils ein Sollwert und Istwert für den Regler bestimmbar. Hierbei wird als jeweiliger Sollwert, also Synchronisationssollwert, t_Soll_i der Wert t2_i verwendet und als Istwert, also Synchronisationsistwert, t_ist_i, welcher als Summe (t1 + dt1_i) bestimmt wird. Dabei nummeriert der Index i die Teilnehmer der Gruppe durch, nimmt also einen ganzzahligen Wert von 1 bis n an.

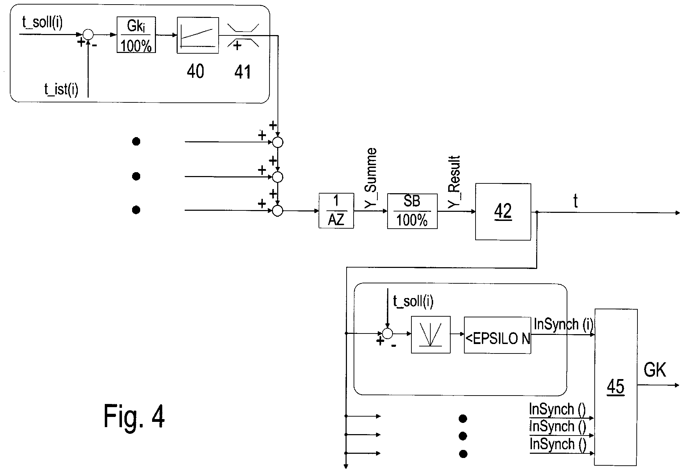

Wie in Figur 4 gezeigt, wird die Differenz aus Sollwert und Istwert mit einer Gütekennzahl multipliziert und dann dem Regler 40 zugeführt, der vorzugsweise als linearer Regler, wie beispielsweise PI-Regler, ausgeführt ist.

Die vom Regler 40 bestimmte Stellgröße wird über ein Begrenzerglied 41 geführt und das so bestimmte Ausgangssignal aufsummiert mit den anderen analog bestimmten Ausgangssignalen bezüglich der anderen Teilnehmer der Gruppe.

Das auf diese Weise entstandene Summensignal wird durch die Anzahl AZ der Teilnehmer der Gruppe dividiert und mit einem die Synchronisationsbereitschaft darstellenden Faktor, also Kennzahl, SB multipliziert und das so entstandene Signal einem Nachführglied 42 zur Nachführung der Phase nach der Uhrzeit, insbesondere mit Begrenzung und Mittelwertbildung, zugeführt, dessen Ausgangssignal die Uhrzeit t, also die synchronisierte Zeitbasis darstellt.

Dabei wird im Nachführglied in einfachster Ausführung die aktuelle synchronisierte Zeit bestimmt gemäß $t\_k = t\_k-1 + b * Y\_Result$, wobei $t\_k$ die aktuelle synchronisierte Zeit zum Zeitschritt k, $t\_k-1$ die zuvor bestimmte synchronisierte Zeit, also die synchronisierte Zeit zum Zeitschritt k-1 und $Y\_Result$ das zur Nachführung verwendete Signal ist sowie k die Zeitschritte nummeriert und b den Wert 1 aufweist oder ein Wert zwischen 0 und 1 ist, insbesondere wobei eine Begrenzung und/oder eine Mittelwertfilterung zusätzlich angewendet wird

Die Kennzahl SB zur Synchronisationsbereitschaft stellt dar, wie schnell und wie stark den Sollwerten der anderen Teilnehmer gefolgt wird. Diese Kennzahl hängt von der Gütekennzahl ab. Dies bedeutet, dass ein beispielsweise neu hinzukommender Teilnehmer, mit einer niedrigeren Gütekennzahl $GK\_i$, beispielsweise Null, eine sehr große Synchronisationsbereitschaft hat. Hingegen weist ein Teilnehmer mit einer hohen Gütekennzahl eine niedrigere Synchronisationsbereitschaft auf.

Somit synchronisieren sich also Teilnehmer mit einer niedrigeren Gütekennzahl schneller auf die Teilnehmer mit hoher Gütekennzahl GK auf. Mit anderen Worten setzen sich die Uhrzeiten der Teilnehmer mit hoher Gütekennzahl schneller und stärker durch als die Uhrzeiten der Teilnehmer mit kleineren Gütekennzahl.

Die Kennzahl der Synchronisationsbereitschaft ist definiert als SB = MAX (100% - GK +SB_BASIC, 100%), wobei GK hier die eigene Gütekennzahl des den Regler aufweisenden Fahrzeugs ist und eine SB_BASIC ein vorgebbarer Parameter.

Zur Ermittlung der Gütekennzahl GK werden für jeden Teilnehmer die Abweichung zwischen seinem Sollwert $t\_Soll\_i$ und dem Ausgangssignal t, also der synchronisierten Zeitbasis , bestimmt und diese Abweichung einem Betragsbildungsglied 43 zugeführt, dessen Ausgangssignal einem Vergleichsglied 44 zugeführt wird, welches das Ausgangssignal mit einem kritischen Wert EPSILON vergleicht und bei Überschreiten des kritischen Wertes EPSILON das Ausgangssignal nicht durchlässt, also den Wert Null ausgibt.

Wenn das Ausgangssignal jedoch den kritischen Wert EPSILON unterschreitet, ist also der Synchronisationssollwert sehr nahe am Synchronisationsistwert und das Ausgangssignal wird durchgeleitet durch das Vergleichsglied 44 zum Block für Gütekennzahlermittlung 45.

Dieser ermittelt aus den entsprechend für die anderen Teilnehmer der Gruppe ermittelten Ausgangssignalen, welche durch die jeweiligen Vergleichsglieder 44 geleitet werden, die Gütekennzahl GK.

Bei einem weiteren erfindungsgemäßen Ausführungsbeispiel wird ein kooperatives Multimasterverfahren zur Synchronisationsbestimmung angewendet. Dabei wertet jeder Teilnehmer nicht nur die Antworttelegramme aus, welche er auf seine ausgesendeten Mastertelegramme empfangen hat, sondern auch die Antworttelegramme der weiteren Teilnehmer auf ein Mastertelegramm eines anderen Teilnehmers. Somit wird die Anzahl der Telegramme, welche für eine Synchronisation mit hoher Gütekennzahl GK notwendig sind, deutlich verringert. Wie in Figur 5 gezeigt, wird vom Teilnehmer B beispielsweise auch das Telegramm C3-A1 ausgewertet und verwendet, obwohl das zugehörige Mastertelegramm nicht von Teilnehmer B gesendet wurde.

Bei einem weiteren erfindungsgemäßen Ausführungsbeispiel sind statt der Fahrzeuge Roboter, mobile Einheiten, Werkzeugmaschinen oder andere Elektrogeräte als Teilnehmer verwendet.

Die Fahrzeuge der Gruppe sind mittels der Synchronisation ihrer Zeitbasen in der Lage, interpolierende Bewegungsfunktionen auszuführen, obwohl die Datenübertragung zwischen ihnen nicht echtzeitfähig ist. Vorzugsweise wird hierbei eine WLAN-Verbindung eingesetzt. Die synchronisierte Zeit t wird dabei von allen Fahrzeugen der Gruppe bestimmt.

Die Sollwerte für die Bewegung werden daher vorzugsweise blockweise übertragen und danach abgearbeitet, also von der auf dem Fahrzeug angeordneten Positioniersteuerung als Sollwerte verwendet, wobei jedem Sollwert ein Zeitpunkt zugeordnet ist und aus diesen Sollwert-Zeitpunkt-Tupeln ein interpolierter Sollwerteverlauf bestimmt und der Positioniersteuerung vorgegeben wird.

Alle Fahrzeuge verwenden einen Zeitoffset t_OFFSET für die Abarbeitung des Sollwerteverlaufs, wobei t_OFFSET eine Pufferfunktion bewirkt, so dass bei zeitweise ausfallender Datenübertragung, also Datenübertragungsunterbrechung, trotzdem ein ungestörter Bewegungsablauf erfolgt. Der Wert t_OFFSET ist als Parameter allen Fahrzeugen der Gruppe vorgegeben. Somit ist ein Bewegungsablauf erreichbar, der vergleichbar ist mit einem System, das eine streng taktsynchrone Datenübertragung verwendet.

Zusätzlich sind zwar ereignisgesteuerte Vorgänge einbringbar. Diese werden aber nur mit einem Zeitversatz t_OFFSET ausgeführt, damit die Interpolationsbeziehung erhalten bleibt.

Bei weitere erfindungsgemäßen Ausführungsbeispielen sind auch Befehle zugelassen, die ohne den genannten Zeitversatz t_OFFSET wirksam werden, also den interpolierten Bewegungsablauf stören könnten. Wenn jedoch solche Befehle nur eine Kommandosynchronisation oder allgemeine Parameter des Fahrzeugs verändern, wird trotzdem keine Störung des interpolierten Bewegungsablaufs bewirkt.

Bezugszeichenliste

1 Fahrzeug
2 maximaler Raumbereich
3 Fahrzeug
4 Fahrzeug
40 Regler, insbesondere PI-Regler
41 Begrenzungsglied
42 Nachführglied zur Nachführung der Phase nach der Uhrzeit, insbesondere mit Begrenzung und Mittelwertbildung
43 Betragsbildungsglied
44 Vergleichsglied
45 Gütekennzahlermittlung
A Teilnehmer, insbesondere Fahrzeug 1
B Teilnehmer, insbesondere Fahrzeug 2
C weiterer Teilnehmer
GK Gütekennzahl
Y_Summe Variable
Y-Result Variable
t Zeit
t_Soll Zeitsollwert
t_Ist Zeitistwert
EPSILON kritischer Wert
M Master, insbesondere Sender des Mastertelegramms
T_i i-ter Teilnehmer, insbesondere i-ter Sender eines Antworttelegramms
Z1 Zyklus
$t_M$ Zeitbasis des Masters
t_i Zeitbasis des i-ten Teilnehmers T_i
t1 Zeitstempel des Masters
t4 Zeitstempel des Masters
t2_i Zeitstempel des i-tenTeilnehmers bei Empfang des Mastertelegramms
t3_i Zeitstempel des i-tenTeilnehmers bei Senden des Antworttelegramms
t2'_i weiterer Zeitstempel des i-tenTeilnehmers bei Empfang des Mastertelegramms
dt1_i Zeitdifferenz zwischen Zeitstempel des Masters beim Absenden des Mastertelegramms und Zeitstempel des i-ten Teilnehmers beim Empfang des Mastertelegramms
dt2_i Zeitdifferenz zwischen Zeitstempel des i-ten Teilnehmers beim Absenden des Antworttelegramms und Zeitstempel des Masters beim Empfang des Antworttelegramms
SB Synchronisationsbereitschaft-Kennzahl


**Patentansprüche**

1. Verfahren zum Betreiben eines Systems für intralogistischen Transport,

wobei das System Teilnehmer, also Fahrzeuge, aufweist, welche mittels eines Datenübertragungskanals verbunden sind, so dass jeder Teilnehmer ein Teilnehmer einer zur Datenübertragung mittels des Datenübertragungskanals verbundenen Gruppe von Teilnehmern ist, wobei die Datenübertragung nicht-echtzeitfähig ist, insbesondere wobei der Datenübertragungskanal eine WLAN-Verbindung ist,
wobei jeder Teilnehmer eine Zeitbasis, also Uhr, aufweist,
wobei

- eine Gruppe gebildet wird, wobei i die Teilnehmer der Gruppe durchnummeriert,
- die Zeitbasis jedes Teilnehmers der Gruppe synchronisiert wird,
- Teilnehmer in Abhängigkeit von einem jeweiligen als Master fungierenden Teilnehmer bewegt werden, wobei die vom jeweiligen Teilnehmer zum jeweiligen Zeitpunkt angesteuerte Position abhängt von der jeweiligen Position mindestens eines anderen Teilnehmers der Gruppe oder von der jeweiligen Position mehrerer oder aller anderen Teilnehmer der Gruppe,

ein erster Teilnehmer der Gruppe, also der Master, ein Mastertelegramm sendet und jeder übrige Teilnehmer der Gruppe daraufhin ein Antworttelegramm sendet,
wobei beim Absenden des Mastertelegramms der zugehörige Zeitpunkt t1 als Zeitstempel dem Mastertelegramm vom ersten Teilnehmer, also vom Master, hinzugefügt wird,

wobei der jeweils empfangende Teilnehmer, also der jeweils i-te Teilnehmer, bei Empfangen des Mastertelegramms den Zeitstempel t2_i hinzufügt,

wobei bei Absenden des Antworttelegramms der i-te Teilnehmer den Zeitstempel t3_i hinzufügt und bei Empfang des Antworttelegramms der erste Teilnehmer, also der Master, den hierbei aktuellen Zeitstempel t4 hinzufügt,

wobei der erste Teilnehmer, also der Master, welcher das Mastertelegramm abgesendet hat, einen Schätzwert dt1_i für Laufzeit bestimmt, insbesondere gemäß

$$dt1\_i = ((t4 - t1) - (t3\_i - t2\_i)) / 2$$

**dadurch gekennzeichnet, dass** die Synchronisierung bestimmt wird, indem zu jedem Antworttelegramm des i-ten Teilnehmers jeweils als Sollwert t_Soll_i der Wert t2_i verwendet und als Istwert t_ist_i, welcher als Summe (t1 + dt1_i) bestimmt wird, verwendet wird,

wobei die Differenz aus Sollwert und Istwert mit einer Gütekennzahl GK multipliziert wird, wobei GK hier die eigene Gütekennzahl des einen jeweiligen Regler (40) aufweisenden Teilnehmers ist, und dann dem Regler (40) zugeführt wird,

wobei die vom Regler (40) bestimmte Stellgröße über ein Begrenzerglied (41) geführt wird und das so bestimmte Ausgangssignal aufsummiert wird mit den anderen analog bestimmten Ausgangssignalen bezüglich der anderen Teilnehmer der Gruppe,

wobei das auf diese Weise entstandene Summensignal durch die Anzahl AZ der Teilnehmer der Gruppe dividiert und mit einem die Synchronisationsbereitschaft darstellenden Faktor, also Kennzahl, SB multipliziert und das so entstandene Signal einem Nachführglied (42) zur Nachführung der Phase nach der Uhrzeit, insbesondere mit Begrenzung und Mittelwertbildung, zugeführt wird, dessen Ausgangssignal die Uhrzeit t, also die synchronisierte Zeitbasis darstellt,

wobei die Kennzahl der Synchronisationsbereitschaft als

SB = MAX (100% - GK +SB_BASIC, 100%) definiert ist, wobei SB_BASIC ein vorgebbarer Parameter ist,

wobei zur Ermittlung der Gütekennzahl GK für jeden Teilnehmer die Abweichung zwischen seinem Sollwert t_Soll_i und dem Ausgangssignal t, also der synchronisierten Zeitbasis , bestimmt wird und diese Abweichung einem Betragsbildungsglied (43) zugeführt wird, dessen Ausgangssignal einem Vergleichsglied (44) zugeführt wird, welches das Ausgangssignal mit einem kritischen Wert EPSILON vergleicht und bei Überschreiten des kritischen Wertes EPSILON das Ausgangssignal nicht durchlässt, also den Wert Null ausgibt,

und welches das Ausgangssignal durchleitet zu einem Block für Gütekennzahlermittlung (45), wenn das Ausgangssignal den kritischen Wert EPSILON unterschreitet,

wobei der Block für Gütekennzahlermittlung (45) aus den entsprechend für die anderen Teilnehmer der Gruppe ermittelten Ausgangssignalen, welche durch die jeweiligen Vergleichsglieder (44) geleitet werden, die Gütekennzahl GK ermittelt.

**2.** Verfahren nach Anspruch 1,
   **dadurch gekennzeichnet, dass**

   zur Bildung der Gruppe ein Kriterium angewendet wird,
   insbesondere wobei das Kriterium

   - die Erreichbarkeit mittels der Datenübertragung mittels des Datenübertragungskanals,
   - den Abstand zu einem ersten Teilnehmer,
   - den Abstand zu einer Position, insbesondere Raumposition,

   betrifft.

**3.** Verfahren nach einem der vorangegangenen Ansprüche,
   **dadurch gekennzeichnet, dass**

   das Bewegen der Teilnehmer in Abhängigkeit von einem jeweiligen als Master fungierenden Teilnehmer oder in gegenseitiger Abhängigkeit

   - nach dem Prinzip der elektronischen Kurvenscheibe oder
   - nach dem Prinzip des elektronischen Getriebes erfolgt oder

- als eine andere zusammengesetzte Kinematik-Bewegung mit virtuellem Leitwertbezug

ausgeführt wird.

4.  Verfahren nach einem der vorangegangenen Ansprüche,
    **dadurch gekennzeichnet, dass**

    das Bewegen der Teilnehmer in Abhängigkeit von einem jeweiligen, als Master fungierenden Teilnehmer unter Verwendung von in einem Speicher des jeweiligen Teilnehmers gepufferten Werten ausgeführt wird,
    insbesondere wobei die Werte Leitwerte sind und/oder ein Feldbus-Steuerwort umfassen, insbesondere einen Notaus-Befehl, einen Schnell-Stop-Befehl, einen Haltefunktions-Befehl und/oder einen Software-bezogenen Befehl,
    insbesondere wobei ein weiteres Feldbus-Steuerwort verwendbar ist, das unmittelbar wirksam wird, also nicht gepuffert wird.

5.  System zur Durchführung eines Verfahrens nach einem der vorangegangenen Ansprüche,
    **dadurch gekennzeichnet, dass**
    die Teilnehmer als Fahrzeuge, wie FTS oder AGV, ausgeführt sind und jeweils eine Einrichtung zum Senden und/oder Empfangen von Daten, insbesondere Telegrammen, mittels des Datenübertragungskanals aufweisen.

## Claims

1.  Method for operating an intralogistics transport system, wherein the system comprises subscribers, **i.e.** vehicles, which are connected via a data transmission channel such that each subscriber is a subscriber of a group of subscribers connected for data transmission via the data transmission channel, wherein the data transmission is not real-time capable, in particular wherein the data transmission channel is a WLAN connection, wherein each subscriber has a time base, **i.e.** a clock,

    wherein

    - a group is formed, where i numbers the subscribers of the group consecutively,
    - the time base of each subscriber of the group is synchronized,
    - subscribers are moved in dependence on a respective subscriber acting as master, wherein the position toward which the respective subscriber heads at the respective time depends on the respective position of at least one other subscriber of the group or on the respective position of multiple or all other subscribers of the group,

    a first subscriber of the group, **i.e.** the master, sends a master telegram and each other subscriber of the group then sends a response telegram in response thereto,
    wherein, when sending the master telegram, the associated time t1 is added as a timestamp to the master telegram by the first subscriber, i.e. by the master,
    wherein, upon receiving the master telegram, the respective receiving subscriber, i.e. the respective $i^{th}$ subscriber, adds the timestamp t2_i,
    wherein, when sending the response telegram, the $i^{th}$ subscriber adds the timestamp t3_i, and upon receiving the response telegram the first subscriber, i.e. the master, adds the current timestamp t4,
    wherein the first subscriber, i.e. the master, that sent the master telegram determines an estimate dt1_i for the transit time, in particular according to

    $$\texttt{dt1\_i = ((t4-t1)-(t3\_i-t2\_i))/2}$$

    **characterized in that**
    the synchronization is determined by using, for each response telegram of the $i^{th}$ subscriber, the value t2_i as the setpoint value t_setpoint_i and by using t_actual_i, which is determined as the sum (t1 + dt1_i), as the actual value,
    wherein the difference between the setpoint value and the actual value is multiplied by a quality index GK, GK here being the specific quality index of the subscriber having a respective controller (40), and then being supplied to the controller (40), wherein the control variable determined by the controller (40) is passed through a limiter element (41), and the output signal thus determined is summed with the other analogously determined output signals relating to the other subscribers of the group,

wherein the resulting summed signal is divided by the number AZ of subscribers of the group and is multiplied by a factor, i.e. an index, SB that represents the synchronization readiness, and the resulting signal is supplied to a correcting element (42) for correcting the phase according to the time, in particular comprising limiting and averaging, the output signal of which represents the time t, i.e. the synchronized time base,

wherein the index for synchronization readiness is defined as SB = MAX (100% - GK + SB_BASIC, 100%), where SB_BASIC is a specifiable parameter,

wherein, in order to determine the quality index GK for each subscriber, the difference between the latter's setpoint value t_setpoint_i and the output signal t, i.e. the synchronized time base, is determined, and this difference is supplied to an absolute-value generation element (43), the output signal of which is supplied to a comparison element (44) which compares the output signal with a critical value EPSILON and, if the critical value EPSILON is exceeded, prevents the output signal from passing through, i.e. outputs the value zero,

and which, if the output signal is below the critical value EPSILON, allows the output signal to pass to a quality index ascertainment block (45),

wherein the quality index ascertainment block (45) ascertains the quality index GK from the output signals accordingly ascertained for the other subscribers of the group that are allowed to pass through the respective comparison elements (44).

2. Method according to claim 1,
   **characterized in that**

   in order to form the group, a criterion is applied,
   in particular wherein the criterion concerns

   - the reachability by way of the data transmission via the data transmission channel,
   - the distance from a first subscriber,
   - the distance from a position, in particular a spatial position.

3. Method according to any one of the preceding claims,
   **characterized in that**
   the movement of the subscribers in dependence on a respective subscriber acting as master or in dependence on one another takes place

   - according to the principle of an electronic cam disk, or
   - according to the principle of an electronic transmission, or
   - in the form of another combined kinematics movement using a virtual guide value reference.

4. Method according to any one of the preceding claims,
   **characterized in that**

   the movement of the subscribers in dependence on a respective subscriber acting as master is executed using values buffered in a memory of the respective subscriber,
   in particular wherein the values are guide values and/or include a field bus control word, in particular an emergency shutdown command, a quick stop command, a stop function command and/or a software-related command,
   in particular wherein a further field bus control word can be used, which becomes effective immediately, i.e. is not buffered.

5. System for carrying out a method according to any one of the preceding claims,
   **characterized in that**
   the subscribers are embodied as vehicles, such as DTSs or AGVs, and each have a device for sending and/or receiving data, in particular telegrams, via the data transmission channel.

**Revendications**

1. Procédé de fonctionnement d'un système destiné à du transport intralogistique, ledit système présentant des participants, c'est-à-dire des véhicules, qui sont connectés au moyen d'un canal de transmission de données de sorte que chaque participant est un participant d'un groupe de participants connectés en vue de la transmission de données au moyen du canal de transmission de données, ladite transmission de données n'étant pas appropriée pour le fonctionnement en temps réel, en particulier ledit canal de transmission de données étant une connexion WLAN,

   chaque participant présentant une base de temps, c'est-à-dire une horloge,
   et

   - un groupe est formé, les participants du groupe recevant le numéro i,
   - la base de temps de chaque participant du groupe est synchronisée,
   - les participants sont déplacés en fonction d'un participant respectif faisant office de maître, la position pilotée par le participant respectif à un moment donné dépendant de la position respective d'au moins un autre participant du groupe ou de la position respective de plusieurs ou de tous les autres participants du groupe,

   un premier participant du groupe, à savoir le maître, envoie un télégramme maître et chaque autre participant du groupe envoie ensuite un télégramme de réponse, l'heure t1 correspondante étant ajoutée au télégramme maître par le premier participant, c'est-à-dire le maître, sous forme d'horodatage lors de l'envoi du télégramme maître, le participant récepteur respectif, c'est-à-dire le i$^{\text{ème}}$ participant respectif, ajoute l'horodatage t2_i lors de la réception du télégramme maître,
   lors de l'envoi du télégramme de réponse, le i$^{\text{ème}}$ participant ajoute l'horodatage t3_i et, lors de la réception du télégramme de réponse, le premier participant, c'est-à-dire le maître, ajoute l'horodatage actuel t4,
   le premier participant, c'est-à-dire le maître qui a envoyé le télégramme maître, détermine une valeur estimée dt1_i pour la durée, en particulier calculée comme suit

$$dt1\_i = ((t4 - t1) - (t3\_i - t2\_i))/2$$

   **caractérisé en ce que**
   la synchronisation est déterminée en utilisant la valeur t2_i respectivement comme valeur de consigne t_Soll pour chaque télégramme de réponse du i$^{\text{ème}}$ participant et en utilisant comme valeur réelle la valeur t_ist_i, déterminée comme étant la somme (t1 + dt1_i),
   la différence entre la valeur de consigne et la valeur réelle étant multipliée par un indice de qualité GK, GK étant ici l'indice intrinsèque de qualité du participant présentant un régulateur (40) respectif, puis étant fournie au régulateur (40),
   la grandeur de réglage déterminée par le régulateur (40) étant acheminée par l'intermédiaire d'un organe de limitation (41) et le signal de sortie ainsi déterminé étant additionné aux autres signaux de sortie déterminés de manière analogique par rapport aux autres participants du groupe,
   le signal de somme ainsi généré étant divisé par le nombre AZ des participants du groupe et étant multiplié par un facteur SB, à savoir un indice, représentant la disponibilité de synchronisation et le signal ainsi généré étant envoyé à un organe de suivi (42) en vue du suivi de la phase en fonction de l'heure, en particulier avec limitation et formation de moyenne, le signal de sortie dudit organe de suivi représentant l'heure t, c'est-à-dire la base de temps synchronisée,
   l'indice de la disponibilité de synchronisation étant défini comme
   SB = MAX (100 % - GK +SB_BASIC, 100 %), où SB_BASIC est un paramètre prédéfinissable,
   l'écart entre la valeur de consigne t_Soll_i et le signal de sortie t, c'est-à-dire la base de temps synchronisée, étant déterminé en vue de la détermination de l'indice de qualité GK pour chaque participant, et ledit écart étant fourni à un organe de création de montant (43) dont le signal de sortie est fourni à un organe de comparaison (44)
   qui compare le signal de sortie à une valeur critique EPSILON et, en cas de dépassement de la valeur critique EPSILON, ne laisse pas passer le signal de sortie, et donc délivre la valeur zéro,
   et qui transmet le signal de sortie à un bloc destiné à la détermination de l'indice de qualité (45) lorsque le signal de sortie est inférieur à la valeur critique EPSILON,
   le bloc destiné à la détermination de l'indice de qualité (45) déterminant l'indice de qualité GK à partir des signaux de sortie déterminés de manière correspondante pour les autres participants du groupe et transmis par les organes de comparaison (44) respectifs.

**2.** Procédé selon la revendication 1,
**caractérisé en ce que**

un critère est utilisé pour former le groupe,
le critère concernant en particulier

- l'accessibilité au moyen de la transmission de données par le canal de transmission de données,
- la distance par rapport à un premier participant,
- la distance par rapport à une position, en particulier la position spatiale.

**3.** Procédé selon l'une quelconque des revendications précédentes,
**caractérisé en ce que**
le déplacement des participants en fonction d'un participant faisant office de maître respectif ou en interdépendance est mis en œuvre

- - selon le principe de la came électronique ou
- - selon le principe de la transmission électronique ou
- - sous la forme d'un autre mouvement cinématique composite avec référence virtuelle de conductivité.

**4.** Procédé selon l'une quelconque des revendications précédentes,
**caractérisé en ce que**

le déplacement des participants est mis en œuvre en fonction d'un participant respectif faisant office de maître avec utilisation des valeurs mises en mémoire tampon dans une mémoire du participant respectif,
les valeurs étant en particulier des valeurs de conductivité et/ou comprenant un mot de commande de bus de champ, en particulier une commande d'arrêt d'urgence, une commande d'arrêt rapide, une commande de fonction d'arrêt et/ou une commande liée au logiciel, un autre mot de commande de bus de champ immédiatement efficace, c'est-à-dire non stocké en mémoire tampon, pouvant être utilisé.

**5.** Système permettant la mise en œuvre d'un procédé selon l'une quelconque des revendications précédentes,
**caractérisé en ce que**
les participants sont mis en œuvre sous forme de véhicules, tels que des FTS (véhicules de transport sans conducteur) ou des AGV (véhicules guidés de manière automatique), et présentent respectivement un dispositif d'envoi et/ou de réception de données, en particulier de télégrammes, par l'intermédiaire du canal de transmission de données.

Fig. 1

Fig. 2

Membertabelle:  •
                •
                •

$T_i$
t1
$t2_i$
$t3_i$
$t4_i$
$GK_i$
$dt1_i$

•
•
•

$T_{letzter}$
t1
$t2_{letzter}$
$t3_{letzter}$
$t4_{letzter}$
$GK_{letzter}$
$dt1_{letzter}$

# Fig. 3

Fig. 4

Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- CN 202677192 U
- US 2010085990 A1
- US 2010085989 A1
- US 2010020909 A1
- WO 2013051445 A1
- WO 2013051447 A1
- US 2011261917 A1
- US 2010098111 A1
- EP 2390858 A1
- JP 2010087733 A
- EP 2390744 A1

### In der Beschreibung aufgeführte Nicht-Patentliteratur

- **JEREMY ELSON et al.** Fine-grained network time synchronization using reference broadcasts. *OPERATING SYSTEMS REVIEW, ACM, NEW YORK, NY, US*, 31 December 2002, vol. 36 (SI), 147-163